# EUROPEAN PATENT SPECIFICATION

(11) **EP 2 095 717 B1**
(45) Date of publication and mention of the grant of the patent: **08.05.2013**
(21) Application number: 07828106.0
(22) Date of filing: 30.11.2007
(51) Int. Cl.: A23C 3/03, A23C 7/04, A23C 9/123

(54) **PROCESS FOR PRODUCTION OF FERMENTED MILK, AND FERMENTED MILK**
VERFAHREN FÜR DIE HERSTELLUNG VON VERGORENER MILCH, UND VERGORENE MILCH
PROCÉDÉ DE PRODUCTION DE LAIT FERMENTÉ ET LAIT FERMENTÉ

(30) Priority: 01.12.2006 JP 2006325231
(43) Date of publication of application: 02.09.2009
(73) Proprietor: Meiji Co., Ltd., Tokyo (JP)
(72) Inventor: HORIUCHI, Hiroshi, Odawara-shi Kanagawa 250-0862 (JP)
(74) Representative: Care, Alison
(86) International application number: PCT/JP2007/001329
(87) International publication number: WO 2008/068893

(56) References cited:
- JP-A- 2004 201 601
- JP-A- 2005 176 603
- JP-A- 2005 348 703
- JP-A- 2006 042 814
- JP-A- 2006 141 273
- JP-A- 2006 288 309

## Description

### Field of Invention

The present invention generally relates to a method for producing fermented milk with enough hardness and smoothness. More specifically, the present invention relates to a method for producing fermented milk, such as set type yogurt, and the method intentionally adds an UHT treatment step after deoxygenating of yogurt mix. The yogurt mix is used as the ingredient of the fermented milk.

### Description of the Related Art

Fermented milk like yogurt is desired to have enough hardness so as not to lose shape during the transportation. On the other hand, if fermented milk is too hard the fermented milk is not superior in texture. Thus fermented milk with smoothness is desired.

Previously, in producing fermented milk, yogurt mix (material milk) was fermented after high temperature short time (HTST) process. It is because ultra high temperature (UHT) process could not make fermented milk with enough hardness. Generally, the UHT process is the process to sterilize by heat for about 2 seconds at 120 to 130 degrees Celsius. Generally, UHT is applied to milk sold in the Japanese market. The UHT process sterilizes bacteria included in the milk and makes the protein in the milk change its characteristic. Thus the fermented milk is fragile if yogurt would be produced by using the UHT treated milk.

Therefore, there is a problem that if the fermented milk is produced using the UHT treated milk sold in the Market, the hardness of the obtained fermented milk is not enough.

Thus, HTST process, which is to sterilize yogurt mix for a few minutes at 85 to 95 degrees Celsius, is generally applied to yogurt mix. For example, at the paragraph [0018] of Japanese Patent Laid-Open Publication No. 2004-180526, there is the following description. "After adjusting the ingredient milk, the ingredient of the fermented milk is sterilized for 5-15 minutes at 85 to 95 degrees Celsius, which is a common sterilization condition. Next, the milk is cooled down to 37 to 43 degrees Celsius as usual. Then, lactic acid bacteria starter is added to the milk and the milk is mixed. By the above processes the milk products for fermentation is prepared."

The example 2 of Japanese Patent Laid-Open Publication No. 2005-176603 (see patent document 1 below) discloses the following example. Namely, the starter is added to the yogurt mix sterilized for 5 minutes at 95 degrees Celsius. And then the yogurt mix is mixed with nitrogen to decrease oxygen concentration and standing fermentation is applied at 43 degrees Celsius.

Furthermore, the example 2 of Japanese Patent Laid-Open Publication No. 2006-288309 (see patent document 2 below) discloses the following example. Namely, the starter is added to the yogurt mix sterilized for 5 minutes at 95 degrees Celsius. And then the yogurt mix is mixed with nitrogen to decrease oxygen concentration and standing fermentation is applied at 43 degrees Celsius for 3 hours.

In the case of producing fermented milk using the HTST processed yogurt mix, obtained fermented milk is superior to the past. However, smoothness of the fermented milk is expected to be improved.
[Patent document 1] Japanese Patent Laid-Open Publication No. 2005-176603
[Patent document 2] Japanese Patent Laid-Open Publication No. 2006-288309

Further background art is provided in JP 2006-042814 A, which discloses a method of suppressing production of off-flavor by light induction in cow's milk. The disclosed method comprises subjecting the cow's milk to vacuum degasification to bring dissolved oxygen concentration in liquid to <=3 ppm, and heat-sterilizing the cow's milk to be packed in a container.

### Disclosure of the Invention

### Problems to be solved by the Invention

An object of the present invention is to provide a method for producing fermented milk, especially set type yogurt, with enough hardness and smoothness. Another object of the present invention is to provide fermented milk produced by the method.

### Means for solving the problems

The present invention is basically based on the knowledge that fermentation of yogurt mix deoxygenized (degassed) and UHT processed can produce fermented milk with not only enough hardness but also smooth texture.

More specifically, the producing method of fermented milk in the present invention relates to a producing method of fermented milk including the following steps. In other words, the method comprises the first deoxygenating step in which oxygen concentration in yogurt mix is decreased. The method comprises the ultra high temperature sterilization step in which the yogurt mix after the first deoxygenating step is heated for longer than 1 second at higher than 110 degrees Celsius so as to sterilize the yogurt mix. The method comprises the fermentation step in which the sterilized yogurt mix is fermented.

### Effect of the Invention

According to the present invention, it is provided that a novel method for producing fermented milk, especially set type yogurt, with enough hardness and smoothness. Furthermore, according to the present invention, such fermented milk produced with the method is provided.

### Brief explanation of figures

[Figure 1] Figure 1 is a graph of relation between types of sterilized milk (milk) and hardness.
[Figure 2] Figure 2 is a graph of relation between types of sterilized milk (reduced skim milk) and hardness.
[Figure 3] Figure 3 is a graph of relation between concentration of solids-not-fat in sterilized milk (milk) and length of fermentation.
[Figure 4] Figure 4 is a graph of an example of results of measurements of fermented milk with curd meter.

### The Best Mode For Carrying Out The Invention

### The first embodiment

One embodiment of the present invention is explained hereafter. The producing method of fermented milk of the first embodiment of the present invention basically relates to the following method. In other words, the method comprises the first deoxygenating step in which oxygen concentration in yogurt mix is decreased. The method comprises the ultra high temperature sterilization step in which the yogurt mix after the first deoxygenating step is heated for longer than 1 second at higher than 110 degrees Celsius so as to sterilize the yogurt mix. The method comprises the fermentation step in which the sterilized yogurt mix is fermented.

The ingredient, apparatus, and conditions for manufacturing the fermented milk are disclosed, e.g., in the following documents: JP 2004-180526, JP 2005-176603, JP2006-288309, the specification of USP No. 6025008, the specification of USP No. 5482723, the specification of USP No. 5096731, and the specification of USP No. 4938973.

In this specification the term "fermented milk" may mean yogurt, fermented milk which is defined by the Japanese law of milk related material, milk product of lactic fermenting beverage, or lactic fermenting beverage. The fermented milk manufactured by the method of the present invention will be preferred if it has suitable hardness. Thus, the examples of the "fermented milk" in this specification include yogurt such as set type yogurt (solid fermented milk), soft yogurt (pasty fermented milk) and drink yogurt (liquid fermented milk). A preferable yogurt in the present invention is set type yogurt such as plain yogurt. Generally, the plain yogurt is produced by filling raw materials in container to be subsequently fermented (post-fermentation). On the other hand, the soft yogurt and drink yogurt are produced by providing grain refinement and homogenization to fermented milk to be subsequently filled in the container (pre-fermentation). The method of the present invention for producing fermented milk can be used in both of the above-mentioned producing methods. Preferably, the method of the present invention is directed to a method for producing fermented milk by the post-fermentation.

Previously, if yogurt mix was exposed to high temperature, such as higher than 110 degrees Celsius, it was impossible to obtain yogurt that had enough hardness to be sold as merchandise because the characteristic of the protein included in the yogurt mix had been changed. The present invention intentionally adds inert gas into the yogurt mix so as to expel oxygen and the protein included in the yogurt mix be protected. Thus even though the UHT treatment, which was not used for producing yogurt, is executed to the yogurt mix, fermented milk, especially set type yogurt, with enough hardness and smoothness to be sold as merchandise is obtained. Hereinafter each of the process of the present invention will be described in detailed.

### The first deoxygenating step

The first deoxygenating step is the step for excluding the oxygen from yogurt mix by means of adding inert gas into the yogurt mix or executing degasses process at the low pressure or at vacuum. It is thought that, by executing this process, oxygen is excluded and the protein included in the yogurt mix is protected.

"Yogurt mix", which is also called fermented milk mix, is mixture used as the ingredient of fermented milk, such as yogurt. The present invention is capable of using any of the known yogurt mix. The yogurt mix may be pre-sterilized one or sterilized one. Specific examples of raw materials of yogurt mix include water, raw milk, sterilized milk, skim milk, dry whole milk, dry skim milk, butter milk, butter, cream, whey protein concentrate (WPC), whey protein isolate (WPI), α-La, and β-Lg. Other example of the yogurt mix includes gelatin which is heated before added. Yogurt mix is known in the art and may be prepared by known method.

In deoxygenating step, for example, known apparatus for replacing oxygen dissolved in the yogurt mix with inert gas may be used. The examples of the apparatus are disclosed in JP 2001-78665, JP2001-9206, and JP2005-110527.
The oxygen dissolved in the yogurt mix shall be replaced with inert gas so as to the oxygen be excluded by the above apparatus.

JP 2001-78665 discloses the following apparatus. In other words, the document discloses "An apparatus for substituting the dissolved oxygen in milk or the like with nitrogen gas, a substituting apparatus for milk or the like with nitrogen gas which is characterized in that a nitrogen gas substituting tank connected to a material tank by a liquid-sending pipe is installed, a nitrogen gas supplying device is connected to the said liquid-sending pipe at the side of the material tank while a nitrogen gas mixing/dispersing device is installed at the side of the above nitrogen gas substituting tank, another end of the branched liquid-sending pipe connected to the upstream side from the nitrogen gas-supplying device of the liquid-sending pipe is introduced into a nitrogen gas-substituting tank, a spraying nozzle is connected to the said part and each of the above liquid-sending pipes, nitrogen gas supplying device and a connecting branched pipe is equipped with a flow rate controlling device."

JP2001-9206 discloses the following apparatus. In other words, the document discloses "the mulch step deform and degas apparatus, the apparatus comprising disperse board rotationally supported in a vacuum chamber, the disperse board capable of rotate with the center of the vertical axis of the board, the disperse board dispersing target liquid that is equipped onto the dispersed board that rotates at a high speed by means of centrifugal force, thereby the gas form dissolved in the target liquid being deformed and degassed, characterized in that the disperse board comprises multiple layers and the target liquid is equipped separately to the each of the multiple layers of the disperse board".

JP2005-110527 discloses the following apparatus: the beverage manufacturing apparatus comprises a de-aerating means and a bubble breaking means.

"Inert gas" may be noble gas such as helium, neon, argon, and xenon, as well as gas such as nitrogen.

In place of adding inert gas, the oxygen dissolved in yogurt mix may be eliminated by means of degas. The degas apparatus used for such a degas process are, for example, the apparatus disclosed in the JP 2002-370006 and JP 2005-304390.

JP 2002-370006 discloses the following apparatus. In other words, the document discloses: "A liquid disposing apparatus, the apparatus degassing by means of hollow fiber membrane, characterized in that the hollow fiber membrane is non porous hollow fiber membrane and the density of membrane is in the range of 2000 to 7000 m²/m³".

JP 2005-304390 discloses the following apparatus. In other words, the document discloses: "A apparatus for lessening the density of oxygen dissolved in the drink material, the apparatus making the drink material be minute particles and be exposed to low pressure atmosphere so as to decrease the density of oxygen dissolved in the drink material, characterized in that the apparatus makes the drink material into the minute particles that have average particle diameter of 50 micro meter to 1000 micro meter by adding pressure to the drink material and spraying the drink material".

The first deoxygenating step may be executed using any one of the above described apparatus. More specifically, de-oxygen process may be executed till the amount of oxygen dissolved in the yogurt mix (DO, density of dissolved oxygen) to be less than 5 ppm, preferably less than 3 ppm, and more preferably less than 2 ppm.

### The ultra high temperature sterilization step

The ultra high temperature sterilization step in which the yogurt mix after the first deoxygenating step was heated for longer than 1 second at higher than 110 degrees Celsius so as to sterilize the yogurt mix. Note that there may be additional step or steps between the first deoxygenating step and the ultra high temperature sterilization step. The ultra high temperature sterilization step sterilizes bacteria and makes the protein change its characteristic suitably.

In the present specification, "ultra high temperature (UHT) processing" means process for heating mixture of raw materials from which the fermented milk is made at a temperature of 110 degrees of Celsius or above for 1 or more seconds so as to attain sterilization. Temperature of the UHT is preferably 120 to 140 degrees Celsius, and more preferably 120 to 130 degrees Celsius. On the other hand, by arranging the heat temperature, more smoothed fermented milk is obtained. The heat temperature may be 135 to 155 degrees Celsius, preferably 135 to 150 degrees Celsius and more preferably 135 to 145 degrees Celsius. The holding time, duration, of the UHT is preferably 1 second to 5 minutes, more preferably 1 second to 2 minutes, and further more preferably 1 seconds to 1 minute. However, the sufficient sterilizing effect can be obtained even with short holding time like 1.5 seconds to 3 seconds. From viewpoint of smoothness of obtained fermented milk, the holding time of the UHT is preferred to 3 seconds to 5 seconds.

The ultra high temperature sterilization step may be executed by means of known apparatus. After the ultra high temperature sterilization step, the cooling process may be adopted. The cooling process is the step for cooling the yogurt mix having been heated by the heat sterilization process to the temperature of near the fermentation temperature. As a cooling method, known methods used in the cooling process of the fermented milk may be adopted. For example, the heated yogurt may be cooled with a heat exchanger.

### Fermentation process

The fermentation process is the step for fermenting the yogurt mix after the ultra high temperature sterilization step. The fermentation process may comprise two steps of fermentation. The fermentation process makes the yogurt be merchandise. Note that there may be cooling process or other process or processes between the ultra high temperature sterilization step and the fermentation process. The preferable fermentation process is for fermenting mixture of the yogurt mix and the starter.

As "Starter", the present invention may use any of known starters. The preferable examples of the starters are lactic acid bacterial starters. The present invention may preferably use one or at least two species of lactic acid bacterial starters selected from the group of "*Lactobacillus bulgaricus (L. bulgaricus), Streptococcus thermophilus (S. thermophilus), Lactobacillus lactis (L. lactis), Lactobacillus gasseri (L. gasseri)*, and *Bifidobacterium*, as well as lactic acid bacteria and yeasts generally used for producing fermented milk". Among these, the preferred starter is based on the mixed starter of *Lactobacillus bulgaricus (L. bulgaricus)* and *Streptococcus thermophilus (S. thermophilus)* that is standardized by the codex alimentarius. Other lactic acid bacteria such as *Lactobacillus gasseri (L. gasseri), Bifidobacterium*, and the like may be added to the yogurt starter in accordance with desired fermented milk. The additive amount of the starter may be appropriately selected from the amount adopted by a known method for producing fermented milk. The inoculation method of the starter may follow the known method used for producing fermented milk.

Fermentation conditions such as fermentation temperature may be adjusted as appropriate considering the kinds of lactic acid bacteria added to the yogurt mix, desired flavor of the fermented milk, and the like. As a specific example, the temperature in the fermentation room (fermentation temperature) may be maintained at 30 to 50 degrees Celsius. At this temperature, the lactic acid bacteria are generally active, so that the fermentation can be developed effectively. Preferable fermentation temperature is 40 to 45 degrees Celsius and more preferable fermentation temperature is 41 to 44 degrees Celsius. If the fermentation is executed under the above temperature, to lessen the density of oxygen in the yogurt mix before the ultra high temperature sterilization step has magnificent effect on improvement of the texture and the hardness of fermented milk. In other words, when the fermentation is executed under the above temperature, the fermented milk that has character superior to the fermented milk obtained without executed the above treatment. When conventional ultra high temperature sterilization is executed without lessening the oxygen density of the yogurt mix, the hardness of the obtained fermented milk after fermentation is not enough. On the contrary, ultra high temperature sterilization is executed after the oxygen density of yogurt mix is lessen, obtained the hardness of the fermented milk obtained after fermentation is enough.

The fermentation time may be adjusted as appropriate in accordance with the starter, the fermentation temperature, and the like. Specifically, the examples of fermentation time are 1 to 5 hours, or 2 to 4 hours.

For example, in the case of the post-fermentation, the container is filled with the mixture of the yogurt mix and the starter. Then the container is put in the fermentation room. The fermentation room is set to the predetermined temperature and the container is maintained for the predetermined time in order to ferment the yogurt mix. Thus the fermented milk can be obtained.

### The second embodiment of the present invention

The second embodiment of the present invention further comprises the second deoxygenating step after the ultra high temperature sterilization step of the first embodiment of the present invention. After the second deoxygenating step, the yogurt mix is fermented in the fermentation process. The second deoxygenating step is the step for excluding the oxygen from yogurt mix, which is executed the ultra high temperature sterilization step.

More specifically, the second embodiment of the present invention is the producing method of fermented milk. The method comprises the first deoxygenating step in which oxygen concentration in yogurt mix is decreased. The method comprises the ultra high temperature sterilization step in which the yogurt mix after the first deoxygenating step was heated for longer than 1 second at higher than 110 degrees Celsius so as to sterilize the yogurt mix. The method comprises the second deoxygenating step after the ultra high temperature sterilization step in which oxygen concentration in yogurt mix is decreased. The method comprises the fermentation step in which the sterilized yogurt mix is fermented after the second deoxygenating step.

The each step of the second embodiment is basically the same as that of the first embodiment. Thus the description of the first embodiment is cited herein and do not describe again so as to escape the same description is repeatedly described to explain the second embodiment. Note that, even as for the second deoxygenating step, the same apparatus may be used and the same condition is applicable as the first deoxygenating step.

The fermented milk produced by using the UHT treated yogurt mix with additional deoxygenating (deaerating) treatment was smoother than that produced without such treatments. Further, surprisingly, unexpected meritorious effect that the duration time of fermentation can be controlled within approximately predetermined time regardless of the change of composition of yogurt mix.

Fermentation conditions such as fermentation temperature may be adjusted as appropriate considering the kinds of lactic acid bacteria added to the yogurt mix, desired flavor of the fermented milk, and the like. As a specific example, the temperature in the fermentation room (fermentation temperature) may be maintained at 30 to 50 degrees Celsius. At this temperature, the lactic acid bacteria are generally active, so that the fermentation can be developed effectively. Preferable fermentation temperature is 35 to 40 degrees Celsius and more preferable fermentation temperature is 36 to 39 degrees Celsius. When the fermentation is executed under the above temperature, the fermented milk that has character superior to the fermented milk obtained without executed the above treatments and it is possible to attain more efficient method for producing fermented milk.
When the ultra high temperature sterilization is executed without lessening the oxygen density of the yogurt mix, the obtained fermented milk after fermentation does not have enough smoothness. Further, even though the oxygen density of the yogurt mix is lessen before the ultra high temperature sterilization, the obtained fermented milk after fermentation does not have enough smoothness if lessening the oxygen density of the yogurt mix is not executed before the fermentation step. Thus, it is difficult to control the duration of fermentation to be predetermined time. On the other hand, when the oxygen density of the yogurt mix is lessen before the ultra high temperature sterilization and the oxygen density of the yogurt mix is further lessen before the fermentation step, the obtained fermented milk has enough smoothness and the duration of fermentation can be controlled to be predetermined time.

The fermented milk of the present invention is characterized in that it has characteristic of enough hardness and smoothness. Such characteristics are understood by comparison with the conventional fermented milk after transportation by vehicle or eat actually. Further such characteristics are examined by the result of the analysis of curd meter. The hardness (yogurt curd tension, CT) was measured according to the measurement manual of the Neo Curd Meter M302 (I. Techno Engineering, previously IIO Electric Inc.). The curd meter measures the insert angle of the fermented milk by means of the yogurt knife with 100 gram weight and expresses the measured value in the curve of the graph. In the graph, the vertical axis indicates the height of the knife, and the horizontal axis indicates the weight of the knife that excess 100 gram. Further, 10 mm of vertical axis has the same length of 10 gram of the horizontal axis. The length till broken of the insert angle curve is an index for the hardness (value of hardness, Elastic Force) and the angle is an index for the smoothness.

### Example 1

Hereinafter, the present invention is explained using the working examples. However, the invention is not limited to the examples and the scope of the invention may be determined with known modification.

### Example 1

### Relationship between the kinds of sterilized milk (milk) and Hardness (curd tension)

In the example 1, the influence of the kinds of sterilized milk (milk), in other words sterilizing condition of milk, on the physical character of yogurt was investigated.

90 kg of raw milk (milk without sterilization) was separated 3 groups and each group has 30 kg. 3 kinds of sterilization were executed to the 3 groups and then yogurt mixes were obtained. The conditions of the sterilization were:
(i) High temperature short time sterilization (95 degrees Celsius, 2 minutes) was adopted for the raw milk, without treatment of deoxygenating; Conventional condition of sterilization for yogurt mix;
(ii) Ultra high temperature sterilization (130 degrees Celsius, 2 seconds) was adopted for the raw milk, without treatment of deoxygenating; Conventional condition of sterilization for milk; and
(iii) Ultra high temperature sterilization (130 degrees Celsius, 2 seconds) was adopted for the raw milk, with treatment of deoxygenating (the oxygen density was decreased to be 2 to 3 ppm).

Hereinafter, the sterilized milk of the group (i), (ii) and (iii) are also called "Usual HTST treated milk", "Usual UHT treated milk", and "UHT treated milk after deoxygenating", respectively.

These 3 groups of the sterilized milk (yogurt mixes after sterilization) were separated into 6 groups and each group had 15 kg. 2 kinds of fermentation conditions were applied to the 6 groups and then each of fermented milk (yogurt) was arranged. The fermentation conditions were as follows:
(i) Fermentation under usual temperature (43 degrees Celsius), without treatment of deoxygenating; Conventional fermentation condition for yogurt; and
(ii) Fermentation under low temperature (37 degrees Celsius), with treatment of deoxygenating (the oxygen density was decreased to be 2 to 3 ppm).

Hereinafter, the fermentation conditions of (i) and (ii) are called as "Usual fermentation" and "fermentation with low temperature deoxygenating", respectively.

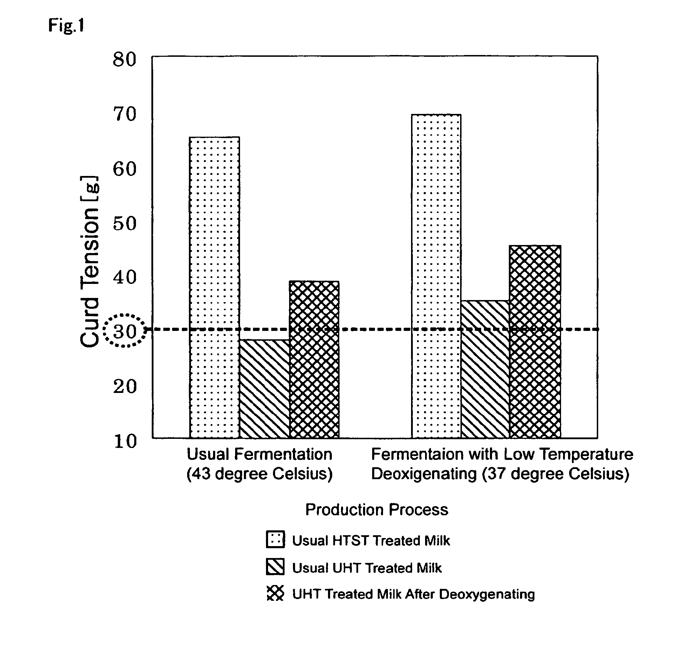

In the fermentation process, 2 wt % of lactic acid bacteria starter (mixed culture of *Lactobacillus bulgaricus* (*L. bulgaricus* JCM 1002T) and *Streptococcus thermophilus* (*S. thermophilus* ATCC 19258)) was inoculated. These milk products without fermentation (start materials, 6 kinds) were filled in containers and fermented in the fermentation room at the predetermined temperature. The fermentation process was finished when the lactic acid acidity reaches 0.7 %. These fermented milks were cooled to 10 degrees Celsius to yield the final product. The fermentation time was 3 to 5 hours. The lactic acid acidity was calculated by the titration with 0.1 normal sodium hydroxide using phenolphthalein as and indicator. Curd tensions (CT) of the obtained fermented milk were measured. The results thereof are shown in the Figure 1. Figure 1 is a graph of relation between types of sterilized milk (milk) and hardness.

Generally, it is preferred for the fermented milk to have more than 30 g of hardness (Curd tensions). Seen from figure 1, it is understood that the fermented milk obtained using the milk of sterilization condition (i) has enough hardness to be merchandise under usual fermentation and fermentation with low temperature deoxygenating. Next, it is understood that the fermented milk obtained using the milk of sterilization condition (ii) lacks hardness to be merchandise under usual fermentation. On the other hand, it is understood that the fermented milk obtained using the milk of sterilization condition (ii) has enough hardness to be merchandise under fermentation with low temperature deoxygenating. Finally, it is understood that the fermented milk obtained using the milk of sterilization condition (iii) has enough hardness to be merchandise under usual fermentation and fermentation with low temperature deoxygenating.

In the figure 1, when "Usual HTST treated milk" is used as ingredients, the fermented milk has enough hardness under fermentation conditions of "Usual fermentation" and "fermentation with low temperature deoxygenating". However, the angle of curd meter was about 60 degrees in case of "Usual fermentation" and the angle was about 40 degrees in case of "fermentation with low temperature deoxygenating". It means that the composition and the smoothness to the tongue are not always enough.
When "Usual UHT treated milk" is used as ingredients, the fermented milk does not have enough hardness under fermentation conditions of "Usual fermentation". When "Usual UHT treated milk" is used as ingredients, the fermented milk has enough hardness under fermentation conditions of "fermentation with low temperature deoxygenating". The angle was 30 degrees in case of "Usual fermentation" and the angle was 30 degrees in case of "fermentation with low temperature deoxygenating". Namely, in case of "fermentation with low temperature deoxygenating", obtained fermented milk had superior hardness and smoothness.
When "UHT treated milk after deoxygenating" is used as ingredients, the fermented milk has enough hardness under fermentation conditions of "Usual fermentation" and "fermentation with low temperature deoxygenating". The fermented milk produced by UHT treatment after yogurt mix (e.g., raw milk 100%) is deoxygenated (DO about 1 to 4 ppm) has stronger composition (yogurt curd) than that produced without deoxygenating. In this case, the angle was 30 degrees in case of "Usual fermentation" and the angle was 20 degrees in case of "fermentation with low temperature deoxygenating". In case of "fermentation with low temperature deoxygenating", obtained fermented milk had far superior hardness and smoothness. Note that figure 1 only shows when SNF density is 8.7 wt %, the similar tendency was observed when SNF density was 8.3 wt %.

As is shown in the above analysis, the fermented milk obtained through UHT treatment was adopted to yogurt mix has superior to that obtained through HTST treatment when it comes to flavor (from a view point of taste). The main reason of the difference is smoothness of texture. On the other hand, the fermented milk obtained through UHT was adopted to yogurt mix generally had softened composition (yogurt curd) and it was not possible to obtain the fermented milk that had tough composition enough to keep its shape even though it receive an impact during the transportation of the merchandise. Especially, when only raw milk was used as an ingredient of yogurt mix, the fermented milk (100% raw milk yogurt) obtained through UHT treatment has lower Solids not fat (SNF) rates than usual fermented milk's SNF and thus the fermented milk has problem of soft composition. Thus, previously, there was no choice but to abandon using UHT treatment from a view point of quality. On the other hand, the analysis of the present invention enables to obtain "Yogurt with 100% raw milk (Set type yogurt with UHT treated 100% raw milk)", which it was impossible to obtain previously.

### Example 2

### Example 2; Relationship between the kinds of sterilized milk (reconstituted skim milk) and Hardness (curd tension)

In the example 2, the influence of the kinds of sterilized milk (reconstituted skim milk), in other words sterilizing condition of reconstituted skim milk, on the physical character of yogurt was investigated.

2 kg of reconstituted skim milk (10 wt% of skim milk is dissolved (reconstituted) into water) was separated 2 groups and each group has 1 kg. 2 kinds of sterilization were executed to the 2 groups and then yogurt mixes were obtained. The conditions of the sterilization were:
(i) Auto Clave sterilization (121 degrees Celsius, 1 minute) was executed to reconstituted skim milk, without treatment of deoxygenating; Pseudo conventional condition of sterilization for milk;
   Conventional condition of sterilization for yogurt mix;
(ii) Auto Clave sterilization (121 degrees Celsius, 1 minute) was executed to reconstituted skim milk, with treatment of deoxygenating (DO 1 to 2 ppm).

Hereinafter, the sterilized reconstituted skim of the group (i), and (ii) are also called "Usual UHT treated milk", and "UHT treated milk after deoxygenating", respectively.

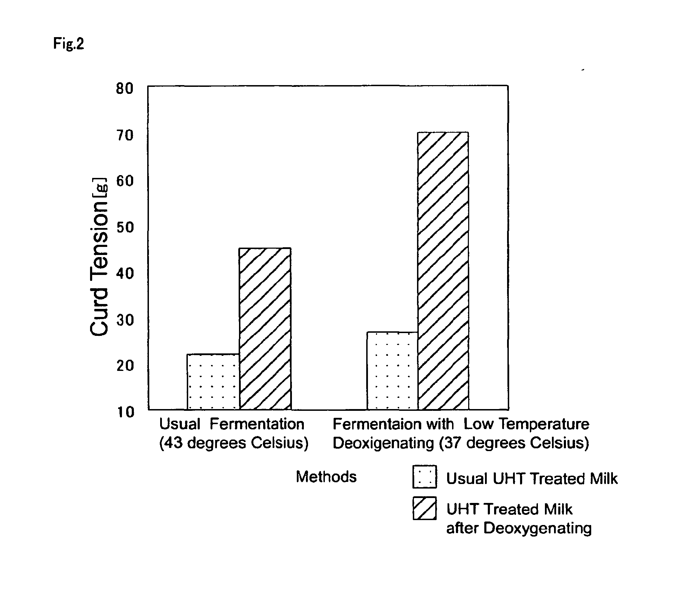

These 2 groups of the sterilized milk (yogurt mixes after sterilization) were separated into 4 groups and each group had 500 g. 2 kinds of fermentation conditions were applied to the 4 groups and then each of fermented milk (yogurt) was arranged. The fermentation conditions were the same as those of example 1. The results thereof are shown in the Figure 2. Figure 2 is a graph of relation between types of sterilized milk (reduced skim milk) and hardness.

Seen from the figure 2, it is understood that when "Usual UHT treated milk" is used as ingredients, the fermented milk does not have enough hardness under fermentation conditions of "Usual fermentation" and "fermentation with low temperature deoxygenating". The angle was 30 degrees in case of "Usual fermentation" and the angle was 30 degrees in case of "fermentation with low temperature deoxygenating". Obtained fermented milk when "Usual UHT treated milk" is used as ingredients had superior hardness and smoothness.
When "UHT treated milk after deoxygenating" is used as ingredients, the fermented milk had enough hardness under fermentation conditions of "Usual fermentation" and "fermentation with low temperature deoxygenating". In this case, the angle was 30 degrees in case of "Usual fermentation" and the angle was 20 degrees in case of "fermentation with low temperature deoxygenating". In case of "fermentation with low temperature deoxygenating", obtained fermented milk has far superior hardness and smoothness.

### Example 3

### Example 3; Relationship between the density of Solids not fat (SNF) of sterilized milk (milk) and fermentation time

In the example 3, the influence of the density of Solids not fat (SNF) on the fermentation time was investigated.

100 kg of raw milk (without sterilization) was condensed though Reverse Osmosis membrane (RO). Next the condensed milk was deoxygenated (DO 2 to 3 ppm). Then ultra high temperature sterilization (130 degrees Celsius, 2 seconds) was executed to the deoxygenated milk. After adding the condensed milk with water, yogurt mixes were arranged with different SNF densities. The SNF densities were 9.5 wt%, 8.9 wt%, 8.3 wt% and 8.0 wt%.

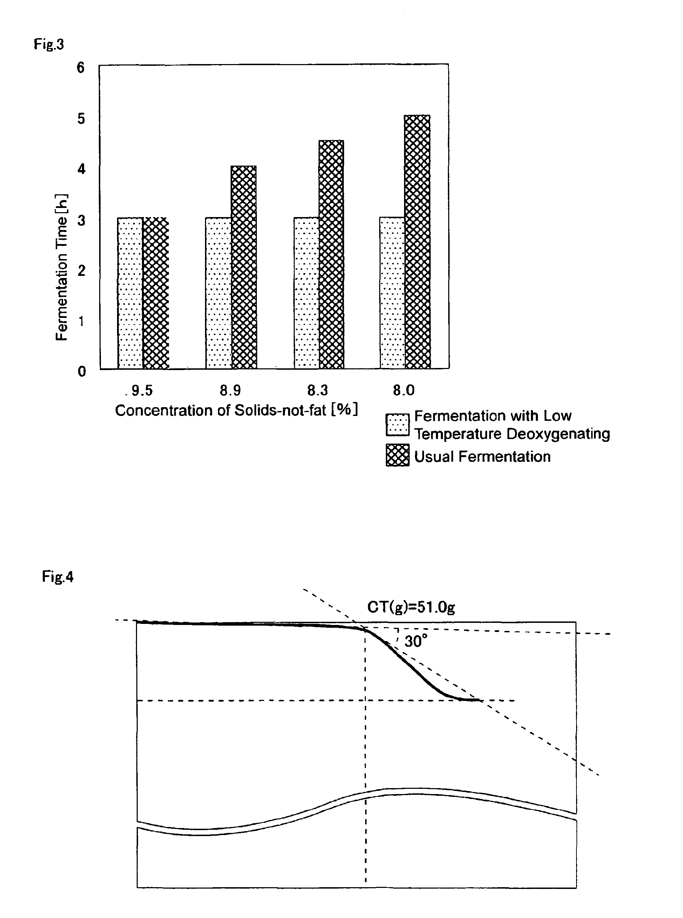

These 4 groups of the sterilized milk (yogurt mixes after sterilization) were separated into 8 groups and each group had 5 kg. 2 kinds of fermentation conditions were applied to the 8 groups and then each of fermented milk (yogurt) was arranged. The fermentation conditions were the same as those of example 1. The results thereof are shown in the Figure 3. Figure 3 is a graph of relation between concentration of solids not fat in sterilized milk (milk) and length of fermentation. In other words, the graph compares time to attain 0.7 % of acidity of lactic acid in case of low temperature (37 degrees Celsius) deoxygenating and that of usual temperature (43 degrees Celsius) deoxygenating.

In the figure 3, in case of "Usual fermentation", the fermentation time increased from 3 to 5 hours with decreasing the density of SNF. On the other hand, in case of "fermentation with low temperature deoxygenating", the fermentation time was about 3 hours regardless of the density of SNF. The composition (solid components, SNF, and so on) of raw milk changes though year. Thus composition of the yogurt mix for yogurt with 100 % raw milk also changes though year. Thus when yogurt with 100 % raw milk is produced though "Usual fermentation", the fermentation time changes from 3 to 5 hours. On the other hand, when the yogurt with 100 % raw milk is produced under combination of "UHT treated milk after deoxygenating" and "fermentation with low temperature deoxygenating", the fermentation time does not change regardless of the composition of raw milk and the fermentation time is about 3 hours. In this case, the fermentation time is controlled to almost predetermined time. In other words, figure 3 shows that in case of "fermentation with low temperature deoxygenating", fermentation is executed within a short and almost uniform time period regardless of the density of SNF. On the other hand, in case of usual fermentation, fermentation duration becomes longer when SNF becomes smaller. Density of SNF included in Milk changes according to the season. Thus, when fermentation duration changes, it is requested to arrange total time for producing products. The method of producing fermented milk of the present invention is capable of making fermentation duration be almost predetermined time even when density of SNF changes according to season. Therefore, this invention can provide a method for producing fermented milk with very high productivity. From this viewpoint, preferred embodiment of the present invention is the method for producing fermented milk in which, when the density of SNF changes from 9.5% to 8.0%, fermentation duration becomes 1 to 1.3 times, more preferably fermentation duration becomes 1 to 1.2 times, still fermentation duration becomes 1 to 1.1 times.

### Example 4

### Example 4; verification regarding the nature of the fermented milk of the present invention

Figure 4 shows the results of measurement of nature of the fermented milk of the present invention by using the Neo Curd Meter M302 (I Techno Engineering, previously IIO Electric Inc.). By the way, if the hardness shown by the curd meter (curd tension) is more than 30 g, preferably more than 40 g, the fermented milk has suitable hardness not to be destroyed during the transportation. On the other hand, the angle indicated by the curd meter is from 0 to 90 degrees. If the angle is small, the fermented milk is judged to be smooth.

The curd meter indicates that the conventional fermented milk had enough hardness; hardness of the fermented milk was measured more than 30 g or more, about 50 to 100 g, or more than 100 g. However, the smoothness was not always enough; the angle was more than 60 degrees, or more than 70 degrees. On the other hand, the hardness of the fermented milk of the present invention was enough; the hardness was more than 30 g, for example, 30 to 100 g, in preferred case, 30 to 80 g, in more preferred case, 30 to 60 g or more than 100 g. Furthermore, the smoothness of the fermented milk of the present invention was enough; the angle, which is an index of smoothness, was less than 30 degrees, in preferred case, 15 to 28 degrees, and in more preferred case, 15 to 25 degrees, in still preferred case, 20 to25 degrees.

### Example 5

### Example 5, verification about effect in the shortening of fermentation time by deoxygenated fermentation

By using yogurt mix with 9.5 wt% of SNF and 3 wt% of fat, we inspected the difference of fermentation time between the milk with the first deoxidization step and the milk without the step. Amount of lactic acid bacteria added to the yogurt mix and fermentation temperature is described in table 1. In the table 1, the required time in which acidity of lactic acid reaches 0.7% is compared. The first deoxidization step shortens the fermentation time in both cases. Especially, at high temperature (for example, higher than 43 degrees Celsius, favorably higher than 45 degrees Celsius), the shortening of fermentation time is remarkable. In other word, to improve productivity, shorter fermentation time is favorable. In this point of view, the first deoxidization step and fermentation temperature higher than 43 degrees Celsius shorten the fermentation time extremely. Thus the treatment is preferable.

[Table 1]

**Table 1 Effect of "Fermentation under Deoxidization" in fermentation time shortening and convergence**

| Condition | Fermentation time required to reach 0.7% of acidity of lactic acid (h) | |
|---|---|---|
| | Conventional Fermentation | Fermentation under Deoxidization |
| Inoculation of 2% Lactic Acid Bactria and Fermentation at 43 degrees Celsius | 3.0 | 2.5 |
| Inoculation of 2% Lactic Acid Bactria and Fermentation at 37 degrees Celsius | 3.7 | 3.0 |
| Inoculation of 0.15% Lactic Acid Bactria (frozen) and Fermentation at 43 degrees Celsius | 5.0 | 3.0 |
| Inoculation of 1% Lactic Acid Bactria and Fermentation at 43 degrees Celsius | 4.5 | 2.5 |
| Inoculation of 0.5% Lactic Acid Bactria and Fermentation at 43 degrees Celsius | 5.0 | 3.0 |
| Inoculation of 2% Lactic Acid Bactria (stocked at 5 degrees Celsius for 10 days) and Fermentation at 43 degrees Celsius | 5.0 | 3.0 |
| Inoculation of 2% Lactic Acid Bactria and Fermentation at 50 degrees Celsius | 6.0 | 3.0 |

### Industrial Applicability

The method for producing fermented milk of the present invention can produce fermented milk like yogurt. Thus the present invention is useful in food industry.

## Claims

1. A producing method of fermented milk, the method comprising:
a first deoxygenating step for decreasing oxygen concentration in yogurt mix;
an ultra high temperature sterilization step for heating the yogurt mix after the first deoxygenating step for longer than 1 second at higher than 110 degrees Celsius so as to sterilize the yogurt mix; and
a fermentation step for fermenting the yogurt mix after the ultra high temperature sterilization step.

2. The producing method of fermented milk in accordance with the claim 1, wherein the temperature at the ultra high temperature sterilization step is 120 to 140 degrees Celsius, and the duration of the ultra high temperature sterilization step is 1 to 3 seconds.

3. The producing method of fermented milk in accordance with the claim 1, wherein the temperature at the ultra high temperature sterilization step is 135 to 155 degrees Celsius.

4. The producing method of fermented milk in accordance with the claim 1, wherein the duration of the ultra high temperature sterilization step is 3 to 5 seconds.

5. The producing method of fermented milk in accordance with the claim 1, wherein the temperature at the fermentation step is 40 to 45 degrees Celsius.

6. The producing method of fermented milk in accordance with the claim 1, wherein the fermented milk is set type yogurt.

7. The producing method of fermented milk in accordance with the claim 1,
further comprising a second deoxygenating step for decreasing oxygen concentration in yogurt mix after the ultra high temperature sterilization step,
wherein the fermentation step is the step for fermenting the yogurt mix after the second deoxygenating step.

8. The producing method of fermented milk in accordance with the claim 7, wherein the temperature at the fermentation step is 35 to 40 degrees Celsius.

9. The producing method of fermented milk in accordance with the claim 7, wherein the fermented milk is set type yogurt.

10. Fermented milk produced by the producing method of fermented milk in accordance with any one of the claims 1 to 9.

## Patentansprüche

1. Verfahren zur Herstellung von fermentierter Milch, umfassend:
einen ersten Desoxygenierungsschritt zur Reduktion der Sauerstoffkonzentration in einem Joghurtgemisch;
einen Ultrahochtemperatur-Sterilisationsschritt zum Erhitzen des Joghurtgemischs im Anschluss an den ersten Desoxygenierungsschritt für mehr als 1 Sekunde auf mehr als 110 Grad Celsius zur Sterilisation des Joghurtgemischs; und
einen Fermentationsschritt zur Fermentation des Joghurtgemischs im Anschluss an den Ultrahochtemperatur-Sterilisationsschritt.

2. Verfahren zur Herstellung von fermentierter Milch nach Anspruch 1, wobei die Temperatur in dem Ultrahochtemperatur-Sterilisationsschritt zwischen 120 und 140 Grad Celsius und die Dauer des Ultrahochtemperatur-Sterilisationsschritts zwischen 1 und 3 Sekunden beträgt.

3. Verfahren zur Herstellung von fermentierter Milch nach Anspruch 1, wobei die Temperatur in dem Ultrahochtemperatur-Sterilisationsschritt zwischen 135 und 155 Grad Celsius beträgt.

4. Verfahren zur Herstellung von fermentierter Milch nach Anspruch 1, wobei die Dauer des Ultrahochtemperatur-Sterilisationsschritts zwischen 3 und 5 Sekunden beträgt.

5. Verfahren zur Herstellung von fermentierter Milch nach Anspruch 1, wobei die Temperatur in dem Fermentationsschritt zwischen 40 und 45 Grad Celsius beträgt.

6. Verfahren zur Herstellung von fermentierter Milch nach Anspruch 1, wobei es sich bei der fermentierten Milch um unterlegten (*set type*) Joghurt handelt.

7. Verfahren zur Herstellung von fermentierter Milch nach Anspruch 1, des Weiteren umfassend einen zweiten Desoxygenierungsschritt zur Reduktion der Sauerstoffkonzentration in einem Joghurtgemisch im Anschluss an den Ultrahochtemperatur-Sterilisationsschritt,
wobei der Fermentationsschritt den Schritt zur Fermentation des Joghurtgemischs im Anschluss an den zweiten Desoxygenierungsschritt darstellt.

8. Verfahren zur Herstellung von fermentierter Milch nach Anspruch 7, wobei die Temperatur in dem Fermentationsschritt zwischen 35 und 40 Grad Celsius beträgt.

9. Verfahren zur Herstellung von fermentierter Milch nach Anspruch 7, wobei es sich bei der fermentierten Milch um unterlegten (*set type*) Joghurt handelt.

10. Fermentierte Milch, die gemäß dem Verfahren zur Herstellung von fermentierter Milch nach einem der Ansprüche 1 bis 9 hergestellt ist.

## Revendications

1. Procédé de production de lait fermenté, le procédé comprenant :
une première étape de désoxygénation pour diminuer la concentration en oxygène dans un mélange de yaourt ;
une étape de stérilisation à ultra-haute température pour chauffer le mélange de yaourt après la première étape de désoxydation pendant plus de 1 seconde à une température de plus de 110 degrés Celsius, afin de stériliser le mélange de yaourt ; et
une étape de fermentation pour fermenter le mélange de yaourt après l'étape de stérilisation à ultra-haute température.

2. Procédé de production de lait fermenté selon la revendication 1, dans lequel la température pour l'étape de stérilisation à ultra-haute température est de 120 à 140 degrés Celsius, et la durée de l'étape de stérilisation à ultra-haute température est de 1 à 3 secondes.

3. Procédé de production de lait fermenté selon la revendication 1, dans lequel la température pour l'étape de stérilisation à ultra-haute température est de 135 à 155 degrés Celsius.

4. Procédé de production de lait fermenté selon la revendication 1, dans lequel la durée de l'étape de stérilisation à ultra-haute température est de 3 à 5 secondes.

5. Procédé de production de lait fermenté selon la revendication 1, dans lequel la température
pour l'étape de fermentation est de 40 à 45 degrés Celsius.

6. Procédé de production de lait fermenté selon la revendication 1, dans lequel le lait fermenté est de type yaourt.

7. Procédé de production de lait fermenté selon la revendication 1,
comprenant en outre une seconde étape de désoxygénation pour diminuer la concentration en oxygène dans le mélange de yaourt après l'étape de stérilisation à ultra-haute température,
dans lequel l'étape de fermentation est l'étape pour fermenter le mélange de yaourt après la seconde étape de désoxygénation.

8. Procédé de production de lait fermenté selon la revendication 7, dans lequel la température pour l'étape de fermentation est de 35 à 40 degrés Celsius.

9. Procédé de production de lait fermenté selon la revendication 7, dans lequel le lait fermenté est de type yaourt.

10. Lait fermenté produit par le procédé de production de lait fermenté selon l'une quelconque des revendications 1 à 9.
